# FASCICULE DE BREVET EUROPEEN

(11) **EP 2 178 728 B1**
(45) Date de publication et mention de la délivrance du brevet: **12.10.2011**
(21) Numéro de dépôt: 08761226.3
(22) Date de dépôt: 19.06.2008
(51) Int. Cl.: B60T 15/42, B60T 13/569, B60T 13/57, B60T 13/575

(54) **SERVOMOTEUR D'ASSISTANCE AU FREINAGE POUR SYSTEME DE FREINAGE DE VEHICULE AUTOMOBILE**
BREMSKRAFTVERSTÄRKER FÜR EIN KRAFTFAHRZEUGBREMSSYSTEM
BRAKE BOOSTER FOR A MOTOR VEHICLE BRAKING SYSTEM

(30) Priorité: 09.07.2007 FR 0704971
(43) Date de publication de la demande: 28.04.2010
(73) Titulaire: Robert Bosch GmbH, 70442 Stuttgart (DE)
(72) Inventeur: BERTHOMIEU, Bruno, 08013 Barcelone (ES); SIMON BACARDIT, Joan, E-08013 Barcelone (ES)
(86) Numéro de dépôt international: PCT/EP2008/057792
(87) Numéro de publication internationale: WO 2009/007221

(56) Documents cités:
- WO-A-02/36403
- WO-A-2004/026653
- DE-A1- 19 835 772

## Description

L'invention concerne un servomoteur d'assistance au freinage et plus particulièrement un servomoteur pneumatique pour véhicule automobile. Ce servomoteur comporte notamment un dispositif permettant de rendre plus efficace le système de freinage du véhicule en cas de freinage d'urgence commandé par le conducteur.

WO2004/02665 décrit un dispositif comportant une clé généralement en forme de U présentant des grandes dispersions des caractéristiques mécaniques c'est-à-dire un comportement variant d'un dispositif à un autre semblable. Cette dispersion est encore accentuée lors des variations de température. Au contraire, le dispositif selon la présente invention présente un fonctionnement très stable.

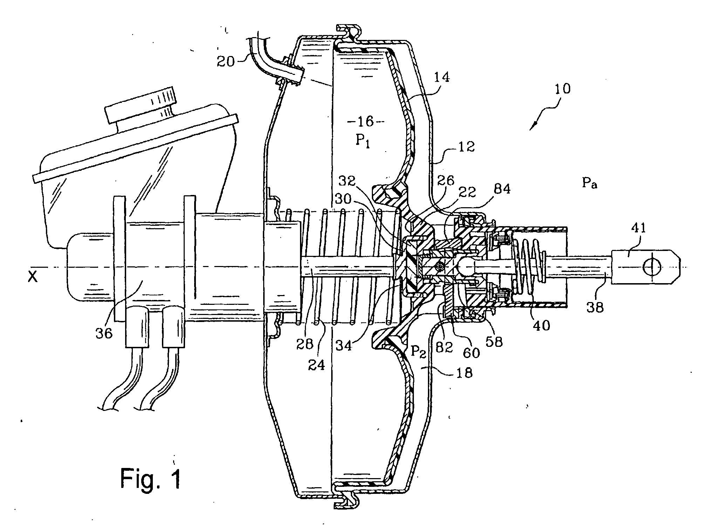

Le servomoteur d'assistance au freinage auquel s'applique plus particulièrement l'invention est un servomoteur du type tel que représenté en figure 1.

On a représenté sur la figure 1 l'ensemble d'un servomoteur pneumatique d'assistance au freinage pour véhicule automobile.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P1" dont la valeur est égale à la valeur de la dépression du moteur du véhicule, et une chambre arrière 18 soumise à une deuxième pression "P2". La deuxième pression "P2" est susceptible, comme il sera décrit ultérieurement, de varier entre la valeur de dépression moteur "P1" et la valeur de la pression atmosphérique "Pa". La chambre avant 16 est alimentée en pression "P1" par l'intermédiaire d'un conduit 20 de dépression qui est relié à une source de dépression du véhicule, par exemple une dépression régnant dans un collecteur d'admission (non représenté) d'un moteur du véhicule.

Le servomoteur pneumatique 10 comporte un piston mobile 22 qui est solidaire de la cloison mobile 14. A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22.

La face avant 26 du piston mobile 22 porte une coupelle 30 de réaction à l'intérieur de laquelle est agencé un disque de réaction 32 en matériau élastomère. Une face avant 34 de la coupelle 30 de réaction est solidaire d'une tige de poussée 28 dont le déplacement est par conséquent commandé par le déplacement du piston mobile 22, et qui permet l'actionnement d'un maître-cylindre 36 hydraulique de freinage du véhicule.

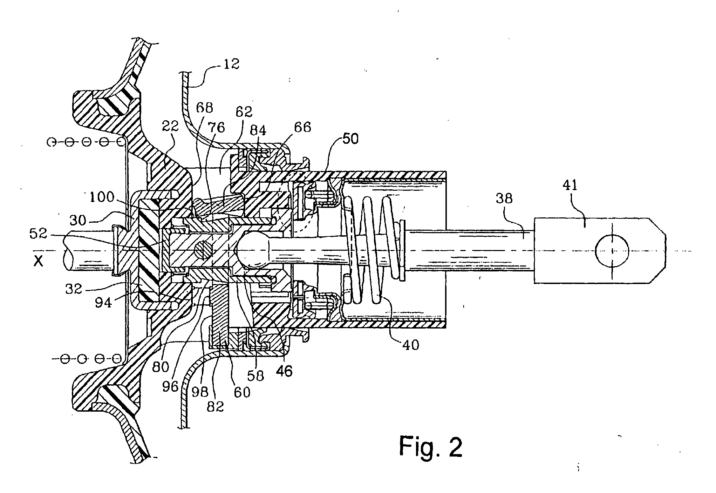

Une tige 38 de commande, qui est par exemple reliée à une pédale de frein du véhicule, est susceptible de se déplacer dans le piston mobile 22, sélectivement en fonction d'un effort axial d'entrée exercé vers l'avant sur la tige de commande 38. L'effort d'actionnement est exercé à l'encontre d'un effort de rappel qui est exercé sur la tige 38 par un ressort de rappel 40 qui est interposé entre le piston mobile 22 et la tige de commande 38. Comme l'illustre plus précisément la figure 2, l'autre extrémité avant de la tige de commande 38 permet de commander un plongeur distributeur 46 qui est monté coulissant dans le piston mobile 22. Un siège annulaire arrière du plongeur distributeur 46 fait partie d'une vanne trois voies 50 qui est susceptible de faire varier la deuxième pression "P2" régnant dans la chambre arrière 18, notamment en mettant en communication la chambre avant 16 et la chambre arrière 18 lorsque la tige 38 de commande est en position de repos, ou en mettant progressivement la chambre arrière 18 en communication avec la pression atmosphérique "Pa" lorsque la tige de commande 38 est actionnée.

Le fonctionnement de la vanne trois voies 50 est connu de l'état de la technique, il ne sera pas décrit plus explicitement dans la présente description.

De manière connue, un palpeur 52 est monté coulissant à la fois sur l'extrémité avant du plongeur distributeur 46, et à l'intérieur d'un alésage du piston mobile 22. Ce palpeur débouche en regard du disque de réaction 32. De la sorte, le palpeur 52 est susceptible d'être sollicité par le plongeur distributeur 46 pour solliciter à son tour le disque de réaction 32 et pour le comprimer, ce qui permet ainsi de transmettre au plongeur distributeur 46 et, ce faisant, à la tige de commande 38, l'effort de réaction du piston du maître cylindre.

Dans une situation de freinage extrême pour laquelle un effort de freinage maximal est exercé sur la tige de commande, l'actionnement de la tige de commande provoque l'actionnement du plongeur distributeur ce qui provoque l'ouverture maximale de la vanne trois voies de manière que la chambre arrière soit mise à la pression atmosphérique. Il s'ensuit un déplacement vers l'avant de la cloison mobile et l'extrémité du plongeur vient au contact du disque de réaction solidaire de la face arrière du piston mobile.

Ainsi, l'effort exercé sur le piston du maître cylindre lorsque la tige de commande est en fin de course résulte de l'effort d'assistance qui est provoqué par la différence de pression de chaque côté de la paroi mobile et de l'effort exercé par le plongeur formant palpeur sur ledit piston du maître cylindre. Le conducteur du véhicule ressent par ailleurs l'effort de réaction du freinage, qui est transmis du piston mobile au plongeur par l'intermédiaire du disque de réaction.

Or, on a constaté que bon nombre de conducteurs, confrontés à une situation de freinage d'urgence, sous-estimaient les risques encourus, et que, après avoir freiné brutalement, ils relâchaient leur effort de freinage alors que le maintien d'un effort de freinage était indispensable pour éviter un accident.

En effet, dans le cas d'une situation de freinage extrême accompagnée d'un déplacement rapide de la tige de commande, le plongeur peut venir au contact du disque de réaction et transmettre au conducteur une sensation de freinage maximal avant même que la différence de pression ne soit maximale entre les chambres de pression avant et arrière, ce qui peut conduire le conducteur à relâcher son effort, quand bien même il devrait être maintenu pour bénéficier de l'effort de freinage maximal.

Un servomoteur tel que celui représenté dans les figures 1 et 2 permet de remédier à cet inconvénient en bloquant le plongeur au contact du disque de réaction à l'aide la douille 58 et d'une pièce de blocage 84. Cette douille et cette pièce de blocage permettent de maintenir un effort maximal vers la tige de poussée 28 quand bien même le conducteur aurait partiellement relâché son effort.

L'invention permet également de résoudre ce problème à l'aide d'un système qui permet d'améliorer la précision du seuil de déclenchement de la fonction de freinage d'urgence et d'améliorer la fiabilité du système.

L'invention concerne donc un servomoteur d'assistance au freinage comportant:
- un boîtier possédant un axe longitudinal déterminé,
- un ensemble jupe et piston pneumatique montés à coulissement étanche dans le boîtier selon l'axe longitudinal, ledit ensemble jupe et piston divisant l'espace intérieur du boîtier en une chambre avant à basse pression et en une chambre arrière à pression variable,
- une vanne trois voies actionnée par une tige de commande,
- un distributeur-plongeur mobile, dans ledit piston pneumatique, selon ledit axe longitudinal sous la commande de ladite tige de commande, ledit distributeur plongeur (46) comportant un palpeur d'application de l'effort de la tige de commande à un dispositif de réaction, ledit ensemble jupe et piston transmettant un effort d'assistance pneumatique à un piston hydraulique du maître-cylindre.

Selon l'invention, le servomoteur comporte en outre:
- une douille qui entoure le distributeur plongeur et qui coulisse dans un alésage du piston pneumatique du servomoteur. Une face annulaire arrière de cette douille est destinée à entrer en contact avec un joint annulaire de la vanne trois voies pour former un clapet d'équilibrage de pressions entre la chambre avant et la chambre arrière,
- un premier ressort qui tend à pousser ladite douille vers ledit joint annulaire,
- au moins une clé de blocage qui est mobile radialement par rapport à la douille et qui traverse la paroi périphérique de la douille,

Le plongeur distributeur possède une face qui est inclinée par rapport audit axe. Cette face commande, lorsque le distributeur plongeur se déplace vers l'avant par rapport au piston, le déplacement radial de la clé de blocage par rapport à la douille de telle façon que la clé de blocage s'écarte radialement de la douille et permet à celle-ci de se déplacer vers l'arrière par rapport au piston sous l'effet dudit premier ressort et tende à fermer ledit clapet d'équilibrage.

Selon une forme de réalisation de l'invention, la clé possède une indentation dont la hauteur radiale est légèrement supérieure à l'épaisseur de la paroi périphérique de la douille. Dans cette forme de réalisation, la douille possède une fenêtre longitudinale lui permettant de se déplacer axialement par rapport à la clé de blocage.

Avantageusement, il est prévu un deuxième ressort tendant à pousser radialement la clé de blocage vers ledit axe.

Selon une forme de réalisation, ce deuxième ressort est un ressort en anneau.

Selon une variante de réalisation de l'invention, le système comporte plusieurs clés de blocage.

Selon l'application d'une telle variante de réalisation le système comporte deux clés de blocage disposées de façon symétrique par rapport audit axe.

Par ailleurs, une forme de réalisation avantageuse de l'invention prévoit que ladite fenêtre possède une première zone de largeur légèrement supérieure à la largeur de la clé de blocage et une deuxième zone située axialement à l'avant de la première zone et de largeur légèrement supérieure à la largeur de l'indentation de la clé de blocage.

L'invention prévoit également avantageusement une clé de déblocage qui traverse la paroi de la douille et qui permet, sous l'action d'un déplacement vers l'avant du piston, de commander un déplacement vers l'avant de la douille.

Les différents objets et caractéristiques de l'invention apparaîtront plus clairement dans la description qui va suivre et dans les figures annexées qui représentent:
- la figure 1, une coupe d'un servomoteur d'assistance au freinage connu dans la technique et décrit précédemment,
- la figure 2, une coupe partielle du servomoteur de la figure 1,
- la figure 3, une coupe longitudinale partielle d'un servomoteur d'assistance au freinage selon l'invention,
- la figure 4, une vue en plan d'une clé applicable dans le servomoteur selon l'invention de la figure 3,
- la figure 5, une vue de dessus partielle de la douille de la figure 3
- la figure 6, une vue en perspective éclatée du système de l'invention
- la figure 7, une vue en perspective écorchée du système de la figure 6 après montage.

Dans la description qui va suivre, on conviendra que les termes "avant" et "arrière" désignent respectivement des éléments ou des positions orientés respectivement vers la gauche et vers la droite sur les figures.

Le servomoteur comporte un axe X selon lequel sont disposés le boîtier du servomoteur, le piston pneumatique, les tiges de commande et de poussée, etc. On dira qu'un élément se déplace axialement lorsque ce mouvement se fait selon une direction parallèle à l'axe X. De façon similaire, un effort radial ou un mouvement radial signifie que cet effort ou ce mouvement sont dirigés vers l'axe X.

L'invention est applicable à un servomoteur d'assistance au freinage représenté par la figure 1 et décrite précédemment. On ne décrira donc pas à nouveau le fonctionnement général d'un tel servomoteur.

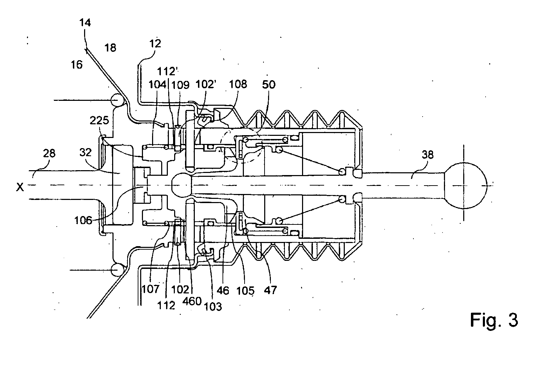

La figure 3 représente un exemple de réalisation du dispositif de l'invention appliqué à un tel servomoteur.

Sur cette figure, certains éléments portent les mêmes références que des éléments assurant les mêmes fonctions dans les figures 1 et 2.

On retrouve donc sur la figure 3, la paroi 12 du boîtier du servomoteur qui contient la jupe 14 déterminant la chambre avant 16 et la chambre arrière 18. La tige de commande 38 permet de commander le plongeur distributeur 46 lequel permet de commander le déplacement du piston 20 sous l'effet d'une différence de pression entre les chambres avant et arrière. La commande de freinage est transmise vers la tige de poussée 28 par l'intermédiaire d'un disque de réaction 106.

Un système de plongeur associé au disque de réaction 106 permet de retransmettre un effort de réaction de la tige de poussée 28 vers la tige de commande 38.

Une douille cylindrique 103 est prévue autour du plongeur distributeur 46. Selon l'exemple de réalisation de la figure 3, cette douille est placée dans le piston 22 et peut se déplacer axialement dans le piston et par rapport au plongeur distributeur 46.

Un ressort 104 a tendance à pousser cette douille vers l'arrière par rapport au piston 22. Ce ressort prend appui sur la face intérieure 225 du piston et pousse sur l'extrémité avant 107 de la douille 103.

L'extrémité arrière 105 de la douille est destinée à entrer en contact avec le joint annulaire 47 de la vanne trois voies 50 comme cela sera décrit ci-après.

Deux clés 102 et 102' mobiles radialement ont pour fonction d'autoriser ou d'interdire le déplacement de la douille 103 vers l'arrière comme cela sera également décrit ci-après. Un dispositif à ressort 109 a tendance à pousser les clés radialement vers l'axe X. Avantageusement, ce dispositif à ressort est un ressort en anneau.

Le plongeur distributeur 46 possède une face 460 inclinée par rapport à la direction de déplacement radiale des clés 102 et 102'. Avantageusement, le plongeur distributeur ayant une forme générale circulaire, la face 460 à la forme générale d'un tronc de cône dont la petite base est orientée vers l'avant. Comme on peut le voir sur la figure 3, un déplacement du plongeur distributeur 46 vers l'avant aura pour effet de façon qu'elles s'écartent de l'axe X.

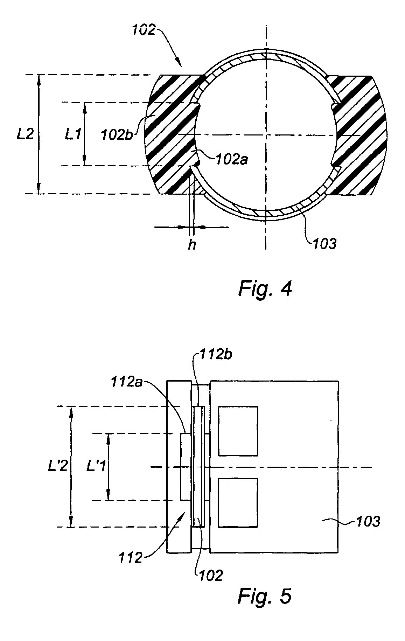

Chaque clé a une forme telle que représentée par la figure 4 avec une partie large 102b de largeur L2 et une partie plus étroite (ou une indentation) 102a de largeur L2. La hauteur h de la partie étroite est légèrement supérieure à l'épaisseur de la paroi de la douille 103. Chaque clé 102 et 102' est destinée à traverser la paroi de la douille par une fenêtre 112, 112' respectivement.

La figure 5 représente, en vue de dessus, un exemple de réalisation d'une fenêtre (112 par exemple). La fenêtre possède une zone 112b de largeur L'2 et une zone 112a de largeur L'1 inférieure à L'2.

Chaque clé est placée dans une fenêtre et occupe une zone 112b lorsque le servomoteur est dans la situation illustrée par la figure 3. Les largeurs L1 et L2 de la clé sont respectivement légèrement inférieures aux largeurs L'1 et L'2 de la fenêtre 112 pour permettre le mouvement de la clé dans la fenêtre.

En se reportant aux figures 3 à 5 on va maintenant décrire le fonctionnement de cet exemple de réalisation.

Si le conducteur freine normalement, le plongeur distributeur se déplace à la même vitesse sensiblement que le piston 22. Le servomoteur fonctionne de manière classique et connue dans la technique.

Si le conducteur freine brutalement et fortement (freinage d'urgence) le distributeur plongeur 46 se déplace vers l'avant plus rapidement que le piston 22.

La face inclinée 460 du plongeur distributeur, en avançant, exerce un effort de déplacement radial sur les clés 102 et 102'. Ces clés s'écartent du distributeur plongeur. La partie large (102b sur la figure 4) de chaque clé sort de la zone de largeur L'2 (112b sur la figure 5) de la fenêtre 112. Lorsque les clés ont été déplacées d'une distance au moins égale à la hauteur h de leur partie telle que 102a, leur partie telle que 102b se trouve entièrement dégagée de la zone 112b et sous l'action du ressort 104, la douille 103 peut se déplacer vers l'arrière. La partie 102a de la clé 102 se trouve dans la zone 112a. L'extrémité 105 de la douille appui alors sur le joint annulaire 47 de la vanne trois voies. Le clapet d'équilibrage des pressions entre les chambres avant et arrière 16 et 18 est fermé. Le clapet d'admission de la vanne trois voies est ouvert et la chambre arrière 18 est mise à la pression atmosphérique.

On voit donc que le système de l'invention permet une fermeture rapide du clapet d'équilibrage de la vanne trois voies et une ouverture du clapet d'admission de l'air atmosphérique dans la chambre arrière. Le piston 22 est ainsi sollicité rapidement par une différence de pressions qui s'établit rapidement entre la chambre avant et la chambre arrière. Le système a donc répondu rapidement à une demande de freinage d'urgence.

Le retour en position d'origine de la douille 103 et des clé 102 et 102' se fait ensuite sous la commande d'une clé de déblocage 108 animée par le piston 22. Cette clé 108 traverse de part en part la douille 103 et son déplacement vers l'avant entraîne le déplacement de la douille 103. Lorsque les zones telle que 112b se trouve en vis à vis des clés (102, 102'), celles-ci sous l'action du ressort 109, se déplacent vers l'axe X et reprennent leur position d'origine.

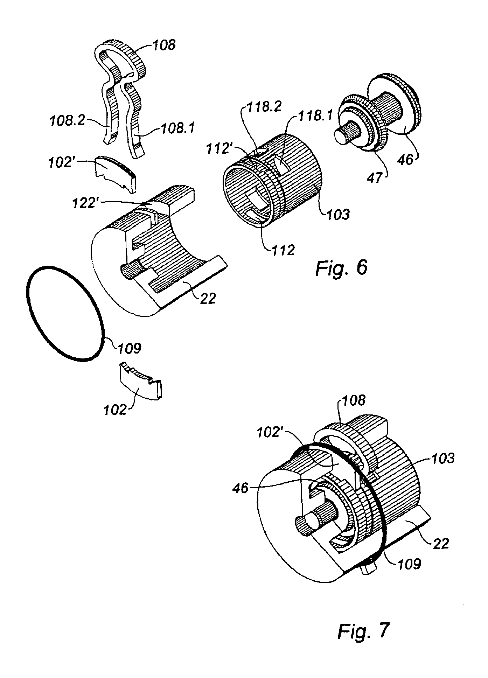

La figure 6 représente une vue éclatée en perspective du système de l'invention et permet de mieux comprendre la situation des différents éléments les uns par rapport aux autres.

Sur cette figure, le piston 22 du servomoteur a été schématisé sous la forme d'un cylindre. La douille 103 est destinée à être placée dans le piston 22 et le plongeur distributeur 46 doit être placé dans la douille 103. Les clés 102, 102' sont destinées à traverser la paroi du piston 22. Par exemple, la clé 102' traverse la paroi du piston par l'ouverture 122'. De plus, elle pénètre dans la fenêtre 112'.

Enfin sur la figure 6, on a représenté une clé de déblocage 108 qui possède deux jambes 108.1 et 108.2. Ces jambes traversent de part en part la douille 103 par des ouvertures telles que 118.1 et 118.2. Ces jambes sont destinées à être situées de part et d'autre du plongeur distributeur 46.

La figure 7 représente le système de la figure 6 en perspective écorchées. Elle permet ainsi de visualiser le montage tel qu'il vient d'être décrit.

## Revendications

1. Servomoteur d'assistance au freinage comportant:
- un boîtier (10) d'axe longitudinal (X),
- un ensemble jupe (14) et piston pneumatique (22) monté à coulissement étanche dans le boîtier (10) selon l'axe longitudinal (X), ledit ensemble jupe et piston (14, 22) divisant l'espace intérieur du boîtier en une chambre avant (16) à basse pression et en une chambre arrière (18) à pression variable,
- une vanne trois voies (50) actionnée par une tige de commande (38),
- un distributeur plongeur (46) mobile, dans ledit piston pneumatique (22), selon ledit axe longitudinal (X) sous la commande de ladite tige de commande (38), ledit distributeur plongeur (46) comportant un palpeur (106) d'application de l'effort de la tige de commande (38) à un dispositif de réaction (32), ledit ensemble jupe et piston (14, 22) transmettant un effort d'assistance pneumatique à un piston hydraulique du maître-cylindre, **caractérisé en ce qu'**il comporte:
- une douille (103) qui entoure le distributeur plongeur (46) et qui coulisse dans un alésage du piston pneumatique (22) du servomoteur, une face annulaire arrière (105) de cette douille (103) étant destinée à entrer en contact avec un joint annulaire de la vanne trois voies pour former un clapet d'équilibrage de pressions entre la chambre avant et la chambre arrière,
- un premier ressort (104) tendant à pousser ladite douille (103) vers ledit joint annulaire,
- au moins une clé de blocage (102, 102') mobile radialement par rapport à la douille (103), traversant la paroi périphérique de la douille (103),
le plongeur distributeur possédant une face (460) inclinée par rapport audit axe, laquelle face commande, lorsque le distributeur plongeur (46) se déplace vers l'avant par rapport au piston, le déplacement radial de la clé par rapport à la douille (103) de telle façon que la clé s'écarte radialement de la douille (103) et permet à celle-ci de se déplacer vers l'arrière par rapport au piston sous l'effet dudit premier ressort et tende à fermer ledit clapet d'équilibrage et **en ce que** la clé (102, 102') possède une indentation (102a) dont la hauteur radiale (h) est légèrement supérieure à l'épaisseur de la paroi périphérique de la douille (103), et **en ce que** la douille (103) possède une fenêtre longitudinale (112) lui permettant de se déplacer axialement par rapport à la clé de blocage (102, 102').

2. Servomoteur d'assistance au freinage selon la revendication 1, **caractérisé en ce que** qu'il comporte un deuxième ressort (109) tendant à pousser radialement la clé de blocage (102, 102') vers ledit axe (X).

3. Servomoteur d'assistance au freinage selon la revendication 2, **caractérisé en ce que** ledit deuxième ressort (109) est un ressort en anneau.

4. Servomoteur d'assistance au freinage selon la revendication 3, **caractérisé en ce qu'**il comporte plusieurs clés de blocage (102, 102').

5. Servomoteur d'assistance au freinage selon la revendication 4, **caractérisé en ce qu'**il comporte deux clés de blocage (102, 102') disposées de façon symétrique par rapport audit axe (X).

6. Servomoteur d'assistance au freinage selon la revendication 5, **caractérisé en ce que** ladite fenêtre (112) possède une première zone (112b) de largeur (L'2) légèrement supérieure à la largeur (L2) de la clé de blocage (102) et une deuxième zone (112a) située axialement à l'avant de la première zone et de largeur **(L'1)** légèrement supérieure à la largeur (L1) de l'indentation de la clé de blocage (102).

7. Servomoteur d'assistance au freinage selon la revendication 6, **caractérisé en ce qu'**il comporte une clé de déblocage (108) traversant la paroi de la douille (103) et permettant, sous l'action d'un déplacement vers l'avant du piston (22), de commander un déplacement vers l'avant de la douille (103).

## Claims

1. Brake booster comprising:
- a housing (10) with a longitudinal axis (X),
- a skirt (14) and pneumatic piston (22) unit slidably mounted in a sealed manner in the housing (10) along the longitudinal axis (X), said skirt and piston (14, 22) unit dividing the internal space of the housing into a front chamber (16) at low pressure and a rear chamber (18) at variable pressure,
- a three-way valve (50) actuated by a control rod (38),
- a distributor plunger (46) which is mobile, in said pneumatic piston (22), along said longitudinal axis (X), under the control of said control rod (38), said distributor plunger (46) comprising a probe (106) for applying force from the control rod (38) to a reaction device (32), said skirt and piston unit (14, 22) transmitting a pneumatic boost force to a hydraulic piston of the master cylinder,
**characterized in that** it comprises:
- a bushing (103) which surrounds the distributor plunger (46) and which slides in a bore of the pneumatic piston (22) of the booster, a rear annular face (105) of said bushing (103) being intended to come into contact with an annular seal of the three-way valve to form a pressure equalizing valve between the front chamber and the rear chamber,
- a first spring (104) tending to push said bushing (103) toward said annular seal,
- at least one locking key (102, 102') which is radially mobile relative to the bushing (103) passing through the peripheral wall of the bushing (103), the distributor plunger having a face (460) which is inclined relative to said axis, which face controls the radial displacement of the key relative to the bushing (103) when the distributor plunger (46) moves forward relative to the piston, so that the key moves radially away from the bushing (103) and permits said bushing to move rearward relative to the piston under the action of said first spring and tends to close said equalizing valve and **in that** the key (102, 102') has an indentation (102a) of which the radial height (h) is slightly greater than the thickness of the peripheral wall of the bushing (103) and **in that** the bushing (103) has a longitudinal aperture (112), permitting it to be displaced axially relative to the locking key (102, 102').

2. Brake booster according to Claim 1, **characterized in that** it comprises a second spring (109) tending to push the locking key (102, 102') radially toward said axis (X).

3. Brake booster according to Claim 2, **characterized in that** said second spring (109) is an annular spring.

4. Brake booster according to Claim 3, **characterized in that** it comprises a plurality of locking keys (102, 102').

5. Brake booster according to Claim 4, **characterized in that** it comprises two locking keys (102, 102') arranged symmetrically relative to said axis (X).

6. Brake booster according to Claim 5, **characterized in that** said aperture (112) has a first zone (112b) of a width (L'2) which is slightly greater than the width (L2) of the locking key (102) and a second zone (112a) located axially to the front of the first zone and of a width (L'1) which is slightly greater than the width (L1) of the indentation of the locking key (102).

7. Brake booster according to Claim 6, **characterized in that** it comprises an unlocking key (108) passing through the wall of the bushing (103) and enabling, under the action of a forward movement of the piston (22), a forward movement of the bushing (103) to be controlled.

## Patentansprüche

1. Servomotor zur Bremsunterstützung, mit:
- einem Gehäuse (10) mit einer Längsachse (X),
- einer aus einer Schürze (14) und einem pneumatischen Kolben (22) bestehenden Baugruppe, die so angebracht ist, dass sie in dichter Weise entlang der Längsachse (X) in dem Gehäuse (10) gleitet, wobei die aus Schürze und Kolben (14, 22) bestehende Baugruppe den Innenraum des Gehäuses (10) in eine vordere Kammer (16) mit niedrigem Druck und eine hintere Kammer (18) mit variablem Druck unterteilt,
- einem Dreiwegeventil (50), das von einer Steuerstange (38) betätigt wird,
- einem Verteilertauchkolben (46), der durch die Betätigung der Steuerstange (38) im Kolben (22) entlang der Längsachse (X) beweglich ist, wobei der Verteilertauchkolben (46) einen Taster (106) zum Aufbringen der Kraft der Steuerstange (38) auf eine Reaktionsvorrichtung (32) aufweist, wobei die aus Schürze und Kolben (14, 22) bestehende Baugruppe eine pneumatische Unterstützungskraft zu einem hydraulischen Kolben des Hauptzylinders überträgt,
- **dadurch gekennzeichnet, dass** er folgendes aufweist:
- eine Hülse (103), die den Verteilertauchkolben (46) umgibt und in einer Öffnung des pneumatischen Kolbens (22) des Servomotors gleitet, wobei eine hintere ringförmige Fläche (105) dieser Hülse (103) dazu dient, mit einer ringförmige Dichtung des Dreiwegeventils in Berührung zu gelangen, um ein Ventilelement zum Ausgleichen der Drücke zwischen der vorderen Kammer und der hinteren Kammer zu bilden,
- eine erste Feder (104), die dazu neigt, die Hülse (103) zur ringförmigen Dichtung zu schieben,
- mindestens einen Sperrungsschlüssel (102, 102'), der in Bezug auf die Hülse (103) radial beweglich ist und die Umfangswand der Hülse (103) durchquert,
wobei der Verteilertauchkolben eine in Bezug auf die Achse geneigte Fläche (460) aufweist, die, wenn der Verteilertauchkolben (46) sich in Bezug auf den Kolben nach vorne verlagert, die radiale Verlagerung des Schlüssels in Bezug auf die Hülse (103) so steuert, dass der Schlüssel sich radial von der Hülse entfernt und es dieser ermöglicht, sich in Bezug auf den Kolben unter der Wirkung der ersten Feder nach hinten zu verlagern, und dazu neigt, das Ausgleichsventilelement zu schließen, und dass der Schlüssel (102, 102') eine Verzahnung (102a) aufweist, deren radiale Höhe (h) geringfügig größer als die Dicke der Umfangswand der Hülse (103) ist, und dass die Hülse (103) ein Langloch (112) aufweist, das es ihr ermöglicht, sich in Bezug auf den Sperrungsschlüssel (102, 102') zu verlagern.

2. Servomotor zur Bremsunterstützung nach Anspruch 1, **dadurch gekennzeichnet, dass** er eine zweite Feder (109) aufweist, die dazu neigt, den Sperrungsschlüssel (102, 102') zur Achse (X) radial zu schieben.

3. Servomotor zur Bremsunterstützung nach Anspruch 2, **dadurch gekennzeichnet, dass** die zweite Feder (109) eine ringförmige Feder ist.

4. Servomotor zur Bremsunterstützung nach Anspruch 3, **dadurch gekennzeichnet, dass** er mehrere Sperrungsschlüssel (102, 102') aufweist.

5. Servomotor zur Bremsunterstützung nach Anspruch 4, **dadurch gekennzeichnet, dass** er zwei Sperrungsschlüssel (102, 102') aufweist, die symmetrisch zur Achse (X) angeordnet sind.

6. Servomotor zur Bremsunterstützung nach Anspruch 5, **dadurch gekennzeichnet, dass** das Langloch (112) einen ersten Bereich (112b) mit einer Breite, die geringfügig größer als die Breite (L2) des Sperrungsschlüssels (102) ist, und einen zweiten Bereich (112a), der axial vor dem ersten Bereich liegt und deren Breite (L'1) geringfügig größer als die Breite (L1) der Verzahnung des Blockierungsschlüssels (102) ist, aufweist.

7. Servomotor zur Bremsunterstützung nach Anspruch 6, **dadurch gekennzeichnet, dass** er einen Entsperrungsschlüssel (108) aufweist, der die Wand der Hülse (103) durchquert und es ermöglicht, unter der Wirkung einer Verlagerung des Kolbens (22) nach vorne eine Verlagerung der Hülse (103) nach vorne zu steuern.
